# EUROPEAN PATENT SPECIFICATION

(11) **EP 3 438 546 B1**
(45) Date of publication and mention of the grant of the patent: **20.11.2019**
(21) Application number: 17775056.9
(22) Date of filing: 28.03.2017
(51) Int. Cl.: F24C 7/04, F24C 7/08, G01B 11/24, G06T 7/50

(54) **HEATING COOKING DEVICE**
HEIZ- UND KOCHVORRICHTUNG
DISPOSITIF DE CUISSON CHAUFFANT

(30) Priority: 29.03.2016 JP 2016065332
(43) Date of publication of application: 06.02.2019
(73) Proprietor: Panasonic Intellectual Property Management Co., Ltd., Osaka-shi, Osaka 540-6207 (JP)
(72) Inventor: SADAHIRA Masafumi, Osaka-shi Osaka 540-6207 (JP); KONDO Ryuta, Osaka-shi Osaka 540-6207 (JP); NAKAMURA Hideki, Osaka-shi Osaka 540-6207 (JP)
(74) Representative: SSM Sandmair
(86) International application number: PCT/JP2017/012591
(87) International publication number: WO 2017/170519

(56) References cited:
- EP-A1- 2 770 295
- WO-A1-2014/086487
- WO-A1-2015/185608
- WO-A1-2016/179424
- WO-A2-2012/063135
- JP-A- H1 163 509
- JP-A- 2010 060 494
- JP-A- 2010 231 686
- JP-A- 2014 202 414
- JP-A- 2014 202 414
- JP-A- 2016 502 061

## Description

### TECHNICAL FIELD

The present disclosure relates to a cooking device that heats and cooks food and the like.

### BACKGROUND ART

Some conventional cooking devices including a heating chamber are provided with an image capturing unit that images an inside of the heating chamber such that a size and the like of food serving as an object to be heated can be confirmed (see, for example, PTL 1).

In a conventional cooking device including a heating chamber, in order to be able to confirm a condition and the like of food serving as an object to be heated, a change in color of the object to be heated is extracted based on an image captured by an image capturing unit, and a degree of scorching or the like of the food, which is a food condition during cooking, is recognized and determined (see, for example, PTL 2).

WO 2012/063135 A1 relates to a cooking device and a procedure for cooking food. In the field of commercial cooking devices such as especially combi-streamers of baking ovens, it is known in the state of art to identify the food to be cooked by RFID tags or by bar codes. In this respect, it is described that a commercial cooking device should be equipped with a digital optical food identification means which takes a picture of the food itself.

WO 2015/185608 A1 relates to a cooking device with light pattern projector and camera. In this respect, it is described a cooking device having a cooking chamber with a loading opening which can be closed by means of a door; a light pattern projector which is arranged in a stationary manner relative to the cooking chamber for generating a light pattern; a camera for capturing images of a region which can be irradiated with the light pattern; and an analyzing device, which is coupled to the camera, for calculating a three-dimensional shape of an object located in the region irradiated with the light pattern by means of a light pattern analysis. The light pattern projector is arranged so as to irradiate a light pattern into the cooking chamber; the camera is arranged in a stationary manner relative to the cooking chamber; the camera is arranged so as to capture images of a cooking chamber region which can be irradiated with the light pattern even when the cooking chamber is closed; and the analyzing device is designed to repeatedly calculate the three-dimensional shape of the at least one object located in the cooking chamber region which can be irradiated with the light pattern during an operation of the cooking chamber.

JP 2014-202414 A and JP 11-063509 A relate to a heating cooker. WO 2014/086487 A1 describes a heat treatment device with monitoring system. EP 2770 295 A1 describes a shape-measuring device, system for manufacturing structures, shape-measuring method, method for manufacturing structures and shape-measuring program.

### Citation List

### Patent Literature

PTL 1: Unexamined Japanese Utility Model Publication No. 59-40714
PTL 2: Unexamined Japanese Patent Publication No. 2001-272045
PTL 3: WO 2012/063135 A1
PTL 4: WO 2015/185608 A1
PTL 5: JP 2014-202414 A
PTL 6: WO 2014/086487 A1
PTL 7: EP 2770 295 A1
PTL 8: JP 11-063509 A

### SUMMARY OF THE INVENTION

The invention is defined by the subject-matter of independent claim 1. The dependent claims are directed to advantageous embodiments.

### ADVANTAGES OF THE INVENTION

Advantageously, it is provided a cooking device that is capable of acquiring a contour of an object to be heated that is intended by a user, namely, a contour that is intended by the user as a region used to determine a change in color, a shape, or the like of the object to be heated, without impairing the convenience of the user in a state where an operation burden on the user is reduced. The object of the invention is solved by the features of independent claim 1.

Advantageously, a cooking device includes a heating unit that heats an object to be heated, a heating chamber that houses the object to be heated, a lighting unit that illuminates inside the heating chamber, an image capturing unit that captures an image of an inside of the heating chamber, a display that displays a contour of the object to be heated to a user, and an image acquisition unit that acquires an image of the object to be heated from the image capturing unit. The cooking device according to an exemplary embodiment of the present disclosure further includes a contour candidate generator that generates a plurality of contour candidates of the object to be heated by using the image acquired by the image acquisition unit, a presented contour determination unit that determines a contour to be displayed on the display from among the plurality of contour candidates generated by the contour candidate generator, and a controller that causes the display to display the contour determined by the presented contour determination unit.

By employing the advantageous configuration above, from among a great variety of contours of an object to be heated that may be generated from a captured image from the viewpoint of engineering, a contour that is suitable to be presented to a user is determined by the presented contour determination unit. The contour determined by the presented contour determination unit is given a priority order of display, and is presented to the user via the display. Further, the cooking device according to the present invention is configured to request that the user approve the contour that has been given the priority order and has been presented to the user. By employing the configuration above, a correct contour that matches a user's intention, namely, a correct contour that is intended by the user as a region used to determine a change in color, a shape, or the like of an object to be heated, can be acquired, and an appropriate heating treatment can be performed on the object to be heated based on the correct contour.

When imaging data is analyzed using a computer or the like based on an image (imaging data) captured by an image capturing unit such as a camera and a contour of an object to be captured is generated, a great variety of contours are generated. However, according to the present disclosure, a cooking device can be provided that is capable of acquiring a contour of an object to be heated that is intended by a user by presenting, to the user, contour candidates according to priority orders from among the great variety of contours and by seeking the determination of the user.

### BRIEF DESCRIPTION OF DRAWINGS

FIG. 1 illustrates a general configuration of a principal part of a cooking device according to a first exemplary embodiment of the present disclosure.
FIG. 2 is a diagram describing a procedure of contour generation in the cooking device according to the first exemplary embodiment of the present disclosure.
FIG. 3 is a diagram describing a flow of contour presentation in the cooking device according to the first exemplary embodiment of the present disclosure.
FIG. 4 is a flowchart describing a contour utilization method in the cooking device according to the first exemplary embodiment of the present disclosure.
FIG. 5 illustrates a general configuration of a principal part of a cooking device according to a second exemplary embodiment of the present disclosure.
FIG. 6 is a diagram describing a flow of contour presentation in the cooking device according to the second exemplary embodiment of the present disclosure.
FIG. 7 illustrates a general configuration of a principal part of a cooking device according to a third exemplary embodiment of the present disclosure.
FIG. 8 illustrates a general configuration of a principal part of a cooking device according to a fourth exemplary embodiment of the present disclosure.

### DESCRIPTION OF EMBODIMENTS

Inventors have studied the conventional cooking devices described above so as to discover that the conventional cooking devices have the problems described below. In the conventional cooking devices described above, it is not considered that an object to be heated is placed in various situations in image recognition. Stated another way, in an image captured by an image capturing unit, an object to be heated is placed in various situations, such as a situation in which the object to be heated is placed on a placing part that configures a background color and the placing part has the same color as the object to be heated, a situation in which the placing part has a color or shape that is similar to a color or shape of the object to be heated, or a situation in which a complicated shadow is generated due to a three-dimensional shape of the object to be heated. However, these situations are not considered in image recognition.

As an example, when recognizing a contour indicating an object to be heated, a conventional cooking device may erroneously recognize, as a contour of the object to be heated, a contour that is not intended by a user, namely, a contour that is not intended by the user as a region used to determine a change in color, a shape, or the like of the object to be heated, such as "a contour in which a background is integrated with the object to be heated due to the matching of a background color and the color of the object to be heated", "a contour of an object other than the object to be heated", or "a contour of a shadow generated due to an influence of irradiation of the object to be heated with light".

When determining a condition of food in accordance with a change in color of an object to be heated, a conventional cooking device may erroneously recognize, for example, juice from the object to be heated to be a scorched color, or may erroneously recognize a shadow that is newly generated due to a change in shape caused by heating to be a scorched color.

In contrast, a cooking device according to an exemplary embodiment of the present disclosure includes a heating unit that heats an object to be heated, a heating chamber that houses the object to be heated, a lighting unit that emits light to the inside of the heating chamber, an image capturing unit that captures an image of an inside of the heating chamber, a display that displays a contour of the object to be heated to a user, and an image acquisition unit that acquires an image of the object to be heated from the image capturing unit. The cooking device according to the present invention further includes a contour candidate generator that generates a plurality of contour candidates of the object to be heated by using the image acquired by the image acquisition unit, a presented contour determination unit that determines a contour to be displayed on the display from among the plurality of contour candidates acquired by the contour candidate generator, and a controller that causes the display to display the contour determined by the presented contour determination unit.

By employing the configuration above, from among a great variety of contours of an object to be heated that may be generated from a captured image from the viewpoint of engineering, a contour that is suitable to be presented to a user is determined by the presented contour determination unit. The contour determined by the presented contour determination unit is given a priority order of display, and is presented to the user via the display. Further, the cooking device according to the present invention is configured to request that the user approve the contour that has been given the priority order and that has been presented to the user. Therefore, a correct contour that matches the user's intention, namely, a correct contour that is intended by the user as a region used to determine a change in color, a shape, or the like of the object to be heated, can be acquired, and an appropriate heating treatment can be performed on the object to be heated based on the correct contour.

A heating treatment device according to an exemplary embodiment of the present disclosure may be configured to cause a displayed contour determination unit to display another contour candidate on a display, when a contour displayed on the display is not approved by a user.

By employing the configuration above, a correct contour can be acquired in a state where an operation burden on a user is reduced, and an object to be heated can be appropriately heated in accordance with the correct contour.

A heating treatment device according to the invention may be configured to cause a presented contour determination unit to display, on a display, an input screen requesting that a user select an approved portion or a disapproved portion of a contour of an object to be heated that has been displayed on the display, when the contour displayed on the display is not approved by the user.

By employing the configuration above, a more accurate contour can be acquired in a state where an operation burden on a user is reduced, and an object to be heated can be appropriately heated in accordance with the accurate contour.

A heating treatment device according to an exemplary embodiment of the present disclosure may be configured in such a way that a contour candidate generator changes a parameter of image information about an image of an object to be heated that has been acquired by an image acquisition unit, and generates a plurality of contour candidates of the object to be heated in accordance with the changed parameter of the image information.

By employing the configuration above, a contour is generated in which an influence of a shadow of an object to be heated that is generated due to light emitted from a lighting unit has been reduced. Therefore, a contour in which an influence of a shadow has been reduced can be presented to a user.

A heating treatment device according to an exemplary embodiment of the present disclosure may further include a lighting pattern storage unit that stores a plurality of lighting patterns that a lighting unit uses to emit light to the inside of a heating chamber. In this case, a presented contour determination unit may be configured to determine a contour to be presented to a user from a plurality of contour candidates that have been generated by a contour candidate generator by using captured images of the object to be heated that have been captured under rays of light emitted in the plurality of lighting patterns.

By employing the configuration above, a contour is generated in which an influence of a shadow of an object to be heated that is generated due to light emitted from the lighting unit has been physically reduced, and a contour in which an influence of a shadow has been reduced can be presented to a user.

A heating treatment device according to an exemplary embodiment of the present disclosure may further include a cooking menu storage unit that stores a plurality of cooking menus and information about an object to be heated that is expected for each of the plurality of cooking menus. In this case, a contour candidate generator may be configured to determine a contour candidate to be displayed on a display in accordance with the information about the object to be heated that is expected for each of the plurality of cooking menus.

By employing the configuration above, a contour that is predicted according to a cooking menu is displayed on the display, and is presented to a user. Therefore, an accurate contour is generated. This enables a more accurate contour to be presented to the user.

According to the present disclosure, a contour candidate to be presented to a user can be determined by a presented contour determination unit from among a plurality of contours generated by a contour candidate generator, a contour that has been given a priority order of presentation can be presented to the user via a display, and approval of the contour can be requested of the user. By doing this, a contour of an object to be heated that is intended by a user, namely, a contour that is intended by the user as a region used to determine a change in color, a shape, or the like of the object to be heated, can be acquired without impairing the convenience of the user in a state where an operation burden on the user is reduced.

Exemplary embodiments of the present disclosure will be described below with reference to the drawings. The present disclosure is not limited to the exemplary embodiments.

### (First exemplary embodiment, not forming part of the invention)

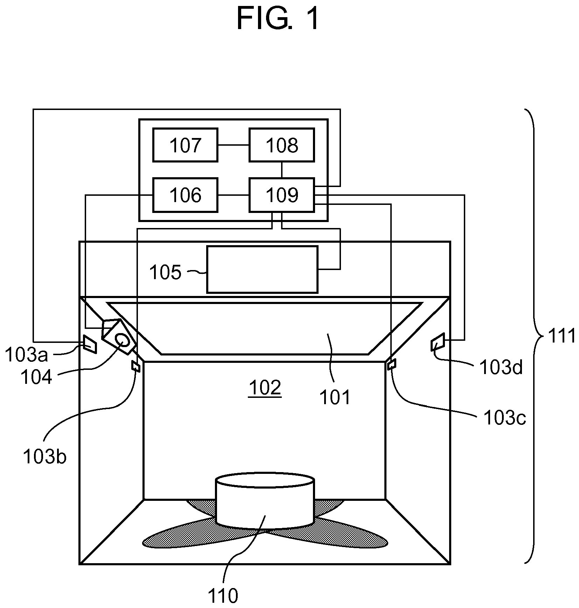

FIG. 1 illustrates a general configuration of a principal part of a cooking device according to a first exemplary embodiment of the present disclosure, which does not form part of the invention.

As illustrated in FIG. 1, cooking device 111 includes heating chamber 102 in which object to be heated 110 is housed. Cooking device 111 includes heating unit 101 that is configured by a heater, a magnetron, a steam generator, or the like, and cooking device 111 is configured to heat and cook object to be heated 110 using heating unit 101.

In cooking device 111 according to the present exemplary embodiment, heating chamber 102 has a substantially rectangular parallelepiped shape that is configured by wall surfaces (an upper wall surface, a left-hand wall surface, a back wall surface, a right-hand wall surface, and a bottom wall surface) and a door (not illustrated). Heating chamber 102 has, for example, a width of 400 mm and a depth of 300 mm. The wall surfaces of heating chamber 102 are formed using material such as an enamel steel sheet, a stainless steel sheet, or a coated steel sheet. Image capturing unit 104 including a camera is provided on a left-hand wall surface viewed from a front of heating chamber 102. Image capturing unit 104 is disposed on an inclined surface that is provided on the left-hand wall surface of heating chamber 102 and that is partially formed by using a drawing method. Image capturing unit 104 is disposed in a position and an orientation in which image capturing unit 104 looks down object to be heated 110 on the inclined surface provided on the left-hand wall surface of heating chamber 102 in such a way that image capturing unit 104 can capture an image of object to be heated 110 inside heating chamber 102 by using the camera.

Lighting units 103a to 103d that are configured, for example, by an LED are disposed on the wall surfaces of heating chamber 102. Cooking device 111 according to the present exemplary embodiment secures an amount of light for image capturing unit 104 to capture an image of object to be heated 110 inside heating chamber 102, by using lighting units 103a to 103d.

Controller 109 is configured using a microcomputer (not illustrated) that includes, for example, a central processing unit (CPU), a memory, an input and output interface, and the like. Controller 109 includes image acquisition unit 106, contour candidate generator 107, and presented contour determination unit 108.

Image acquisition unit 106 is electrically connected to image capturing unit 104, and acquires image data inside heating chamber 102 that has been captured and acquired by image capturing unit 104.

Contour candidate generator 107 generates a plurality of contour candidates based on an image acquired by image acquisition unit 106.

Display 105 is configured, for example, by a liquid crystal display that is electrically connected to controller 109, and display 105 presents, to a user, an image inside heating chamber 102 that has been acquired by image acquisition unit 106, a contour determined by presented contour determination unit 108, and the like.

The operation and effect of cooking device 111 having the above-mentioned configuration are described below. In the description below, contents of a basic operation and applications are described in the order described below.

[1] Process of generating contour of object to be heated 110 and problems in contour presentation
[2] Contour determination process
[3] Overall operation of cooking device 111
[4] Contour utilization method

In the description below, an image acquired by image acquisition unit 106 is basically described to be an image of 24-bit color in which each of three primary colors of light, red, green, and blue, is expressed by 8 bits (0 to 255).

The color of image data is expressed in such a way that (R, G, B) = (R numerical value, G numerical value, B numerical value) (hereinafter referred to as an RGB numerical value or an RGB value). When the RGB numerical value is 0, black is obtained. As the RGB numerical value becomes closer to 255, each color becomes purer. About 16.77 million colors can be expressed by mixing RGB. As an example, when RGB = (255, 0, 0), red is obtained. When RGB = (255, 255, 0), read and green are mixed so that yellow is obtained. When RGB = (0, 0, 0), black is obtained. When RGB = (255, 255, 255), white is obtained.

### [1] Process of generating contour of object to be heated 110 and problems in contour presentation

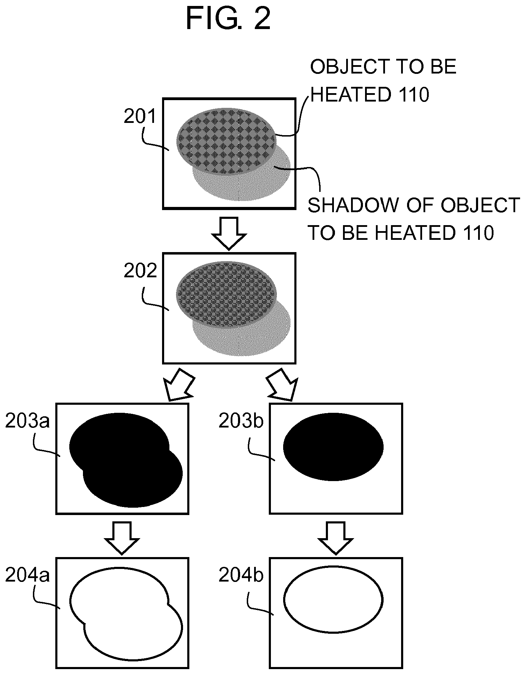

FIG. 2 is a diagram describing a procedure of contour generation in the cooking device according to the first exemplary embodiment of the present disclosure.

A process for acquiring contour images 204a, 204b from captured image 201 of object to be heated 110 is described with reference to FIG. 2. First, captured image 201 is converted into grayscale image 202 (for example, an 8-bit grayscale), and a threshold (a binarization threshold) for binarizing grayscale image 202 is specified from grayscale gradations (for example, in the case of the 8-bit grayscale, 128, which is a median of 256 gradations, is specified). By setting that white is obtained when a pixel value is greater than or equal to the threshold and that black is obtained when the pixel value is smaller than the threshold, binary images 203a, 203b are acquired. In binary images 203a, 203b that have been acquired, a boundary line is drawn by connecting boundaries between white and black. By doing this, contour images 204a, 204b of object to be heated 110 can be acquired.

There is a problem wherein a contour varies according to the selection of a threshold (a binarization threshold) used to acquire binary images 203a, 203b. It is difficult to determine which is a correct contour, contour image 204a that has been acquired from binary image 203a by using threshold a or contour image 204b that has been acquired from binary image 203b by using threshold b, based on degrees of correctness of contour images 204a, 204b that have been output as an image processing result. Naturally, captured image 201 obtained by photographing object to be heated 110 in a normal manner includes many gradations, and from the viewpoint of engineering, a prescribed number of contour variations exist that corresponds to a number of grayscale gradations.

When the threshold is fixed to one threshold in order to acquire a contour under a uniform condition, as an example, in a case where white object to be heated 110, such as bread dough, is placed on white parchment paper that configures a placing part on which object to be heated 110 is placed, object to be heated 110 is integrated with the white parchment paper serving as a background, and a correct contour fails to be acquired.

In order to acquire a correct contour candidate, steps need to be taken such that display 105 presents a contour candidate to a user and the user confirms whether a presented contour is a correct contour of object to be heated 110.

In general, in a cooking device, when a contour is acquired without the confirmation of a user and processing such as image recognition is automatically performed, a contour that does not match the user's intention, namely, a contour that is different from a contour that is intended by the user as a region used to determine a change in color, a shape, or the like of an object to be heated, is highly likely to be erroneously recognized such that malfunction is caused in the cooking device. Accordingly, it is requested that the cooking device have a mechanism for reducing an operation burden on the user in a step of causing the user to confirm whether a correct contour candidate is presented.

In cooking device 111 according to the present exemplary embodiment, contour variations (a plurality of contour candidates) are generated by contour candidate generator 107. In addition, cooking device 111 according to the present exemplary embodiment is configured in such a way that a contour according to a situation (a capturing situation) in which captured image 201 has been acquired by presented contour determination unit 108 is presented to a user via display 105 in consideration of a priority order of presentation to the user and approval is requested of the user. Stated another way, cooking device 111 according to the present exemplary embodiment is configured to reduce an operation burden on the user when the user confirms whether a correct contour candidate has been presented.

### [2] Contour determination process

When controller 109 issues an instruction to determine a threshold to presented contour determination unit 108, presented contour determination unit 108 confirms a distribution of an RGB value in captured image 201, and determines whether captured image 201 is a bright image having a great RGB value (when RGB = (255, 255, 255), a brightest white is obtained) or a dark image having a small RGB value (when RGB = (0, 0, 0), a darkest color, black, is obtained).

As an example, in a case where a reference value (a basic threshold) of an RGB value for determining a brightness of an image is set to 128, which is a medium of an RGB value of 256, presented contour determination unit 108 determines a ratio of pixels having an RGB value that excesses the basic threshold (an RGB value of 128) with respect to all of the pixels in captured image 201. Presented contour determination unit 108 compares the determined ratio with a prescribed value of the ratio of pixels having an RGB value that exceeds the basic threshold with respect to all of the pixels in the image. The prescribed value of the ratio is set in advance in order to determine a brightness of a captured image. By doing this, presented contour determination unit 108 determines whether captured image 201 is a bright image. By using information that has been determined by presented contour determination unit 108, as described above, a binarization threshold is appropriately set, and object to be heated 110 can be prevented from being integrated with a background.

When white balance is equal to black balance in captured image 201, presented contour determination unit 108 selects a medium (for example, an RGB value of 128) as the basic threshold. When a white ratio is greater in captured image 201, presented contour determination unit 108 sets the threshold to be greater than the medium (for example, an RGB value of 160). When a black ratio is greater, presented contour determination unit 108 sets the threshold to be smaller than the medium (for example, an RGB value of 96).

Presented contour determination unit 108 requests that contour candidate generator 107 generate contour candidates using, as the binarization threshold, the acquired basic threshold and a threshold having an interval of a prescribed value from the basic threshold (for example, RGB values of the basic threshold (± 20 or ± 40)).

Contour candidate generator 107 generates a plurality of contour candidates using a requested threshold (in the present exemplary embodiment, contour images 204a, 204b), by using the threshold that has been set by presented contour determination unit 108, as described above.

A contour image acquired at this time includes a contour having a drawn shape of an inside of heating chamber 102. Accordingly, an influence of the contour having the drawn shape of the inside of heating chamber 102 is removed by subtracting, from the acquired contour image, a contour of the inside of heating chamber 102 that is acquired when object to be heated 110 is not housed in heating chamber 102 (and that is stored in advance as initial information).

Presented contour determination unit 108 determines a number of contours and a contour area in each of the acquired contour images, and determines priority orders of contour images to be presented to a user. As an example, when each of the acquired plurality of contour images includes the same number of contours, presented contour determination unit 108 presents a contour image using the basic threshold as a first candidate, and presents the other contour images as the subsequent candidates in order of a threshold closest to the basic threshold (for example, in the order of RGB values of (basic threshold + 20), (basic threshold - 20), (basic threshold + 40), and (basic threshold - 40)). When, from among the acquired plurality of contour image candidates, the contour image using the basic threshold includes a small number of contours, presented contour determination unit 108 determines that object to be heated 110 and a background may be integratedly recognized, and sets a contour image including a large number of contours to have a higher priority order.

When the priority orders of the contour images to be presented are determined, presented contour determination unit 108 transfers the contour images to controller 109. By doing this, the contour determination process of presented contour determination unit 108 is terminated.

When contour candidate generator 107 generates contour candidates, an effect similar to the effect described above (for example, an effect whereby contour candidate generator 107 generates contour candidates) can be achieved by changing a parameter of information about a captured image without changing a threshold. As an example, a numerical value of each component of RGB is one example of the parameter of the information about the captured image. The effect similar to the effect described above can be achieved by uniformly increasing the numerical value of each of the components of RGB so as to obtain (R numerical value + addition value), (G numerical value + addition value), and (B numerical value + addition value), or by uniformly decreasing the numerical value of each of the components of RGB so as to obtain (R numerical value - subtraction value), (G numerical value - subtraction value), and (B numerical value - subtraction value), in a state where the threshold is fixed.

In particular, when a captured image has a great black ratio, image recognition of cooking device 111 is likely to be affected by a black shadow. In this case, the influence of the shadow can be reduced by multiplying a small RGB value by a certain multiplying factor. As an example, an RGB value of 100 or less is multiplied by 1.2. A maximum RGB value is assumed to be 100. Specifically, assume, for example, that RGB = (60, 90, 100). When this RGB value is multiplied by 1.2, (72, 108, 120) is obtained. When RGB values that are greater than or equal to 100 are changed to 100, (72, 100, 100) is obtained.

As described above, by operating a parameter of image information, a dark portion can be diluted and an influence of a shadow can be reduced without changing a threshold.

### [3] Overall operation of cooking device 111

When object to be heated 110 is placed in heating chamber 102, controller 109 causes image acquisition unit 106 to acquire an image of object to be heated 110 that is captured by image capturing unit 104. Controller 109 transfers the acquired captured image of object to be heated 110 to presented contour determination unit 108, and requests that presented contour determination unit 108 determine a contour (a presented contour) to be presented to a user and a presentation order of the contour.

Presented contour determination unit 108 performs the operation described above so as to determine a presented contour to be presented to the user together with a priority order by using a contour image generated by contour candidate generator 107, and to transfer the presented contour to controller 109.

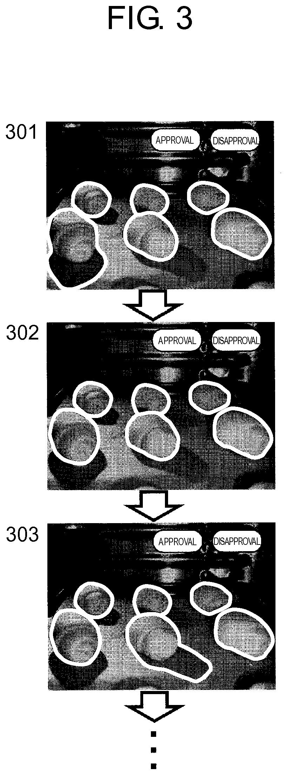

Controller 109 presents presented images 301 to 303 including the presented contour to the user via display 105 in accordance with the priority order, as illustrated in FIG. 3, and receives approval from the user so as to acquire a contour that matches the user's intention, namely, a contour that is intended by the user as a region used to determine a change in color, a shape, or the like of the object to be heated.

At this time, the presented contour is displayed so as to overlap the captured image in order to make the presented contour easily understandable to the user (see FIG. 3). FIG. 3 illustrates presented image 301 serving as candidate 1, presented image 302 serving as candidate 2, and presented image 303 serving as candidate 3.

As is obvious through eyes of the user, in the example of FIG. 3, presented image 302 serving as candidate 2 indicates a correct contour (in presented image 301 and presented image 303, a shadow of object to be heated 110 is erroneously recognized as a portion of a contour of object to be heated 110). Accordingly, presented image 302 is approved by the user.

Controller 109 sets the contour acquired above (a contour in presented image 302) as an initial contour, and causes heating unit 101 to heat object to be heated 110 in accordance with the initial contour. In addition, controller 109 performs heating control (such as the determination of the stopping of heating) utilizing the contour by monitoring a change in the contour from the initial contour, a change in color inside the contour, and the like.

When plural replies of disapproval are received from the user, several requests for approval of the user may impair the convenience of the user. In view of the foregoing, cooking device 111 may be configured to directly determine a contour according to, for example, a method in which the user traces an image on display 105.

### [4] Contour utilization method

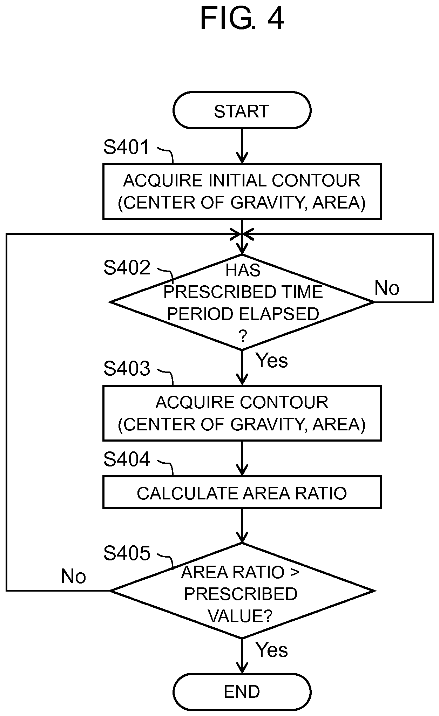

As an example, when object to be heated 110 is bread dough that swells due to heating, a contour can be utilized to automatically detect the completion of fermentation by monitoring a change in an area of the contour. A contour utilization method of cooking device 111 according to the present exemplary embodiment is described with reference to FIG. 4.

Controller 109 grasps a number of individuals of bread serving as object to be heated 110 based on a number of contours of the initial contour of object to be heated 110 that has been acquired in the operation described above. Controller 109 acquires a center of gravity of a contour of each individual of bread, and an area of the contour indicating a size of bread (an area of a contour determined for each of the individuals) (step S401). The center of gravity of the contour is positional information used to identify each of the individuals of bread.

When heating is started by heating unit 101, bread dough starts swelling due to heating. Controller 109 repeats an operation to perform the respective processes of steps S403, S404, and S405 every time a prescribed time period (for example, 5 seconds) has elapsed until the determination condition of step S405 is satisfied (step S402). Controller 109 acquires contours after a prescribed time period has elapsed, and calculates a center of gravity and an area for each of the individuals of the acquired contours (step S403). Controller 109 associates the center of gravity of the contour with each of the individuals, calculates an area ratio of each of the individuals ((area ratio) = (current area)/(initial contour)) (S404), and compares the area ratio with a prescribed value (for example, the prescribed value is set in such a way that the area ratio is 2) (S405). By doing this, when the area ratio exceeds the prescribed value, controller 109 automatically detects the completion of the fermentation of bread.

When a change in the contour of object to be heated 110 is tracked, as described above, it is requested that an initial contour be accurately acquired in order to grasp a position and a size of an individual. In order to accurately acquire the initial contour, it is requested that a contour candidate be presented to a user and approval be acquired from the user in a state where an operation burden on the user is reduced, as described above, from the viewpoint of performing automatic processing without an error and giving a sense of ease to the user.

As described above, in cooking device 111 according to the present exemplary embodiment, a contour that is suitable to be presented to a user is determined by presented contour determination unit 108 from among a great variety of contours that may be generated from the viewpoint of engineering. Cooking device 111 according to the present exemplary embodiment is configured in such a way that a presented contour determined by presented contour determination unit 108 is presented to a user via display 105 in consideration of a priority order and approval is requested of the user. By employing the configuration above, object to be heated 110 can be appropriately heated and cooked in accordance with a correct contour that matches a user's intention, namely, a contour that is intended by the user as a region used to determine a change in color, a shape, or the like of an object to be heated.

In cooking device 111 according to the present exemplary embodiment, when a contour presented via display 105 is not approved by a user, controller 109 causes display 105 to display another contour candidate according to a priority order of presentation to the user that has been determined by presented contour determination unit 108. By employing the configuration above, a correct contour can be acquired in a state where an operation burden on a user is reduced, and object to be heated 110 can be appropriately heated and cooked.

Cooking device 111 according to the present exemplary embodiment is configured in such a way that contour candidate generator 107 generates a plurality of contour candidates of object to be heated 110 by changing a parameter (such as an RGB value) of information about an captured image. By employing the configuration above, a contour is generated in which an influence of a shadow of object to be heated 110 that is generated due to light emitted from lighting units 103a to 103d is reduced.

The present exemplary embodiment has been described by using an example in which cooking device 111 includes four lighting units 103a to 103d as a lighting unit. However, cooking device 111 may be provided with a single lighting unit (for example, lighting unit 103a), may be provided with two or three lighting units, or may be provided with five or more lighting units.

### (Second exemplary embodiment)

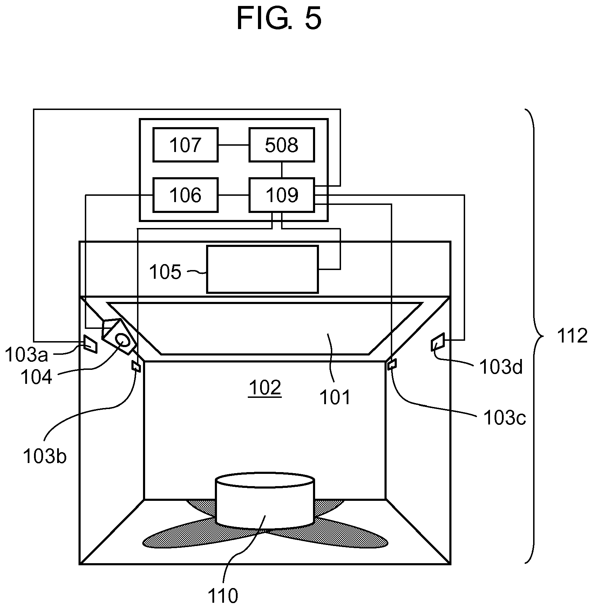

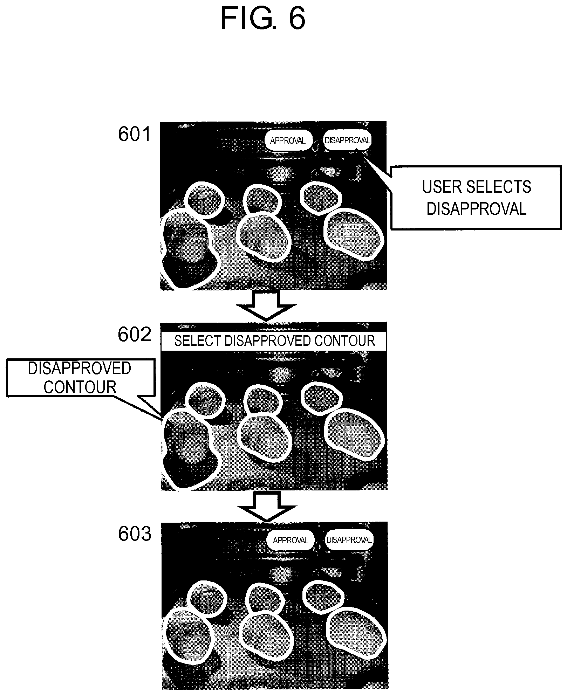

Cooking device 112 according to a second exemplary embodiment, which forms the example according to the invention of the present disclosure is described below with reference to FIGS. 5 and 6.

FIG. 5 illustrates a general configuration of a principal part of a cooking device according to the second exemplary embodiment of the present disclosure. FIG. 6 is a diagram describing a flow of contour presentation in the cooking device according to the second exemplary embodiment of the present disclosure.

Cooking device 112 according to the second exemplary embodiment of the present disclosure is significantly different from cooking device 111 according to the first exemplary embodiment not forming part of the invention in that presented contour determination unit 508 is configured to request that a user select at least an approved portion or a disapproved portion of a contour of object to be heated 110 that has been displayed on display 105, when a contour that has been presented to the user via display 105 is not approved by the user. More specifically, presented contour determination unit 508 is configured to cause the display to display an input screen requesting that the user select (partially select) a disapproved portion from a plurality of the portions in the contour, when the user disapproves at least a portion of the contour of object to be heated 110 that has been displayed on display 105.

In the description below of cooking device 112 according to the second exemplary embodiment of the present disclosure, components that have the same function or configuration as components in cooking device 111 according to the first exemplary embodiment are denoted by the same reference marks, the detailed description of the components are omitted, and description in the first exemplary embodiment is applied. Presented contour determination unit 508 has a configuration and a function that are similar to the configuration and the function of presented contour determination unit 108 in cooking device 111 according to the first exemplary embodiment, excluding the portions particularly described below.

In cooking device 112 according to the second exemplary embodiment of the present disclosure, presented contour determination unit 508 presents a presented contour to display 105, and acquires a correct contour that matches a user's intention, namely, a contour that is intended by the user as a region used to determine a change in color, a shape, or the like of an object to be heated.

Specifically, as illustrated in FIG. 6, when a contour presented to a user via display 105 is disapproved by the user (see presented image 601), controller 109 requests that presented contour determination unit 508 present a presented contour having the subsequent priority order. Presented contour determination unit 508 compares a number of contours and an in-contour area of the presented contour having the subsequent priority order with a number of contours and an in-contour area of the disapproved contour.

When the number of contours and the in-contour area of the disapproved contour are almost the same as the number of contours and the in-contour area of the presented contour having the subsequent priority order (for example, when the number of contours is identical in the presented contour having the subsequent priority order and the disapproved contour and the in-contour area is different by 10% or less between the presented contour having the subsequent priority order and the disapproved contour), controller 109 determines that an applied threshold is partially inappropriate. In this case, presented contour determination unit 508 causes display 105 to display an input screen on which the user selects the disapproved contour from contours that have been presented to the user, under the control of controller 109, and acquires the disapproved contour (see presented image 602).

Presented contour determination unit 508 changes a threshold near the disapproved contour (for example, a region obtained by expanding an in-contour area by 30%), and acquires a contour in which an in-contour area has been changed due to a change in the threshold, and the disapproved contour. Presented contour determination unit 508 presents a contour obtained by only changing an in-contour area of a contour disapproved by the user from among contours in an image presented to the user as the next candidate to the user under the control of controller 109 (see presented image 603).

As described above, cooking device 112 according to the present invention is configured in such a way that, when a contour of object to be heated 110 that has been presented to a user via display 105 is not approved by the user, presented contour determination unit 508 requests that the user select at least an approved portion or a disapproved portion of the contour of object to be heated 110 that has been presented to the user, under the control of controller 109. More specifically, cooking device 112 according to the present exemplary embodiment is configured in such a way that, when the user disapproves at least a portion of the contour of object to be heated 110 that has been displayed on display 105, presented contour determination unit 508 causes display to display an input screen requesting that the user select (partially select) a disapproved portion from a plurality of the portions in the contour.

By employing the configuration above, a more correct contour, namely, a contour of object to be heated 110 that matches a user's intention, and more specifically, a contour that is intended by the user as a region used to determine a change in color, a shape, or the like of the object to be heated, can be acquired without impairing the convenience of the user in a state where an operation burden on the user is reduced. By doing this, object to be heated 110 can be appropriately heated and cooked in accordance with the correct contour.

When plural replies of disapproval are received, several requests for approval may impair the convenience of a user. In view of the foregoing, cooking device 112 may be configured to acquire a correct contour by causing the user to directly select a contour according to, for example, a method in which the user traces an image on display 105.

### (Third exemplary embodiment)

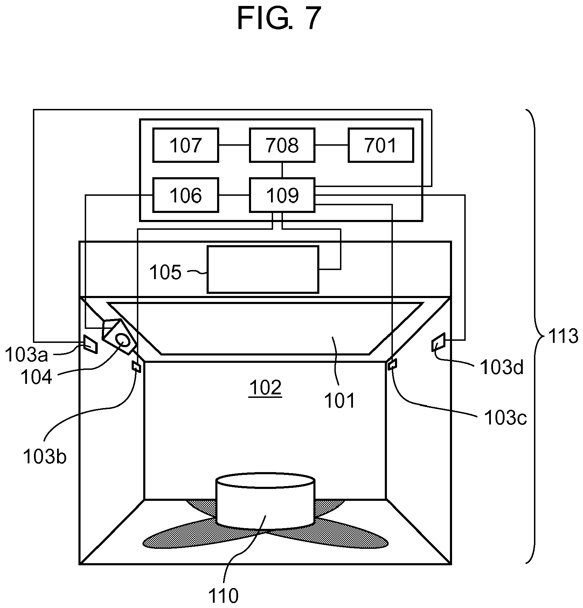

Cooking device 113 according to a third exemplary embodiment of the present disclosure is described below with reference to FIG. 7. Cooking device 113 according to the third exemplary embodiment of the present disclosure is significantly different from cooking device 111 according to the first exemplary embodiment in that cooking device 113 includes lighting pattern storage unit 701 and presented contour determination unit 708 is configured to determine a presented contour from contour candidates in which a lighting pattern has been changed (contour candidates that are generated from images that have been captured under rays of light emitted in lighting patterns different from each other).

In the description below of the cooking device according to the third exemplary embodiment of the present disclosure, components that have the same function or configuration as components in cooking device 111 according to the first exemplary embodiment are denoted by the same reference marks, the detailed description of the components are omitted, and description in the first exemplary embodiment is applied. Presented contour determination unit 708 has a configuration and a function that are similar to the configuration and the function of presented contour determination unit 108, excluding the portions particularly described below.

Cooking device 113 according to the third exemplary embodiment of the present disclosure further includes lighting pattern storage unit 701. Lighting pattern storage unit 701 stores a plurality of lighting patterns different from each other.

In cooking device 113 according to the present exemplary embodiment, when contour candidates are generated by using contour candidate generator 107, presented contour determination unit 708 requests, of controller 109, a plurality of captured images that have been captured in different lighting patterns, in accordance with the plurality of lighting patterns stored in lighting pattern storage unit 701.

As an example, when lighting pattern storage unit 701 stores, as a lighting pattern, three lighting patterns, [P1] full lighting (lighting units 103a to 103d), [P2] lighting only on a left-hand side (lighting units 103a, 103b), and [P3] lighting only on a right-hand side (lighting units 103c, 103d), in cooking device 113, image capturing unit 104 captures images of object to be heated 110 that is irradiated with light in the respective three lighting patterns, and image acquisition unit 106 acquires the images. The images of object to be heated 110 that is irradiated with light in the respective three lighting patterns are different from each other in a direction of a shadow of object to be heated 110 that is generated due to light emitted from a physically different direction (for example, a direction of a shadow of object to be heated 110 viewed from a side of image capturing unit 104). Presented contour determination unit 708 can use, as determination materials, contours that are generated in accordance with captured images including a shadow generated in a different direction due to a difference in a lighting pattern. Therefore, it is easy to estimate where a shadow is located in a dark portion of a captured image. By doing this, an influence of a shadow on a contour presented by presented contour determination unit 708 can be reduced.

As described above, cooking device 113 according to the present exemplary embodiment further includes lighting pattern storage unit 701, and lighting pattern storage unit 701 stores a plurality of lighting patterns different from each other. In cooking device 113 according to the present exemplary embodiment, presented contour determination unit 708 generates contour candidates from images of an inside of heating chamber 102 that have been captured by image capturing unit 104 under rays of light that have been emitted from lighting units 103a to 103d in the plurality of lighting patterns stored in lighting pattern storage unit 701, and presented contour determination unit 708 determines a presented contour. Presented contour determination unit 708 generates contour candidates that respectively correspond to lighting patterns different from each other, in accordance with captured images of object to be heated 110 that is irradiated in the lighting patterns different from each other, and presented contour determination unit 708 determines a presented contour. By employing the configuration above, a contour can be generated in which an influence of a shadow of object to be heated 110 that is generated due to light emitted from lighting units 103a to 103d has been physically reduced, and a contour in which an influence of a shadow has been reduced can be presented to a user.

### (Fourth exemplary embodiment)

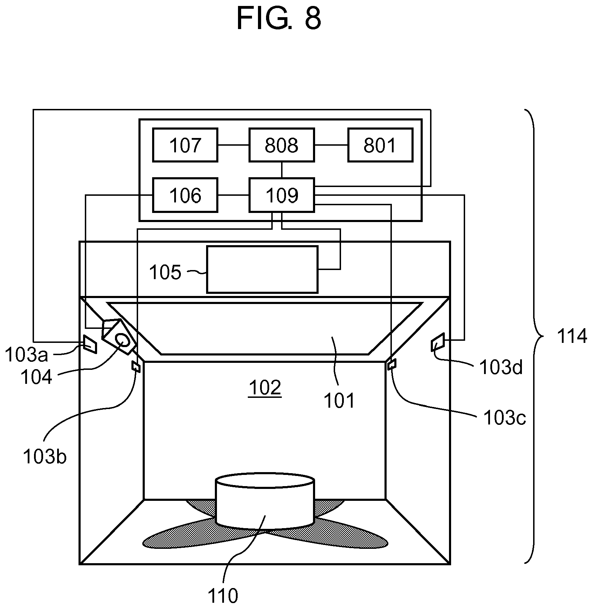

Cooking device 114 according to a fourth exemplary embodiment of the present disclosure is described below with reference to FIG. 8. Cooking device 114 according to the fourth exemplary embodiment is significantly different from cooking device 111 according to the first exemplary embodiment in that cooking device 114 includes cooking menu storage unit 801 that stores a plurality of cooking menus and information about object to be heated 110 that is expected for each of the plurality of cooking menus and presented contour determination unit 808 is configured to determine a contour candidate to be presented in accordance with the information about object to be heated 110 that is expected for each of the plurality of cooking menus.

In the description below of cooking device 114 according to the fourth exemplary embodiment of the present disclosure, components that have the same function or configuration as components in the cooking device according to the first exemplary embodiment are denoted by the same reference marks, the detailed description of the components are omitted, and description in the first exemplary embodiment is applied. Presented contour determination unit 808 has a configuration and a function that are similar to the configuration and the function of presented contour determination unit 108 in cooking device 111 according to the first exemplary embodiment, excluding the portions particularly described below.

In cooking device 114 according to the fourth exemplary embodiment of the present disclosure, when a contour candidate is generated by using contour candidate generator 107, presented contour determination unit 808 acquires, from cooking menu storage unit 801, contour determination information according to information about a cooking menu selected by a user. Examples of the contour determination information include information indicating that a large number of small contours having a similar shape exist in a captured image in a case where the cooking menu is a cookie, and information indicating that a plurality of middle-sized contours having a similar elliptic shape exist in a case where the cooking menu is a roll.

In cooking device 114 according to the present exemplary embodiment, presented contour determination unit 808 is configured to select a contour that satisfies cooking conditions of a cooking menu selected by a user when determining a priority order of a presented contour. By employing the configuration above, in cooking device 114, a ratio can be improved at which a candidate for a contour that matches a user's intention, namely, a contour that is intended by the user as a region used to determine a change in color, a shape, or the like of an object to be heated, is presented.

As described above, cooking device 114 according to the present exemplary embodiment further includes cooking menu storage unit 801 that stores a plurality of cooking menus and information about an object to be heated that is expected for each of the plurality of cooking menus. In cooking device 114 according to the present exemplary embodiment, contour candidate generator 107 is configured to determine a contour candidate to be presented to a user in accordance with the information about the object to be heated that is expected for each of the plurality of cooking menus. By employing the configuration above, a contour that is predicted according to a cooking menu can be presented, a more accurate contour can be generated and acquired, and the more accurate contour can be presented to a user.

### INDUSTRIAL APPLICABILITY

As described above, the present disclosure provides a cooking device that is capable of acquiring a contour of an object to be heated that is intended by a user, namely, a contour that is intended by the user as a region used to determine a change in color, a shape, or the like of the object to be heated, without impairing the convenience of the user in a state where an operation burden on the user is reduced. The present disclosure is applicable, for example, to heaters in various industrial uses, such as a dryer or a chemical reactor, that obtain advantages by recognizing a change in color and a change in a shape in an object to be heated, in addition to a cooking device, such as an oven, a grill, or a heated steam, that performs heating and cooking.

### REFERENCE MARKS IN THE DRAWINGS

101: heating unit
102: heating chamber
103a to 103d: lighting unit
104: image capturing unit
105: display
106: image acquisition unit
107: contour candidate generator
108, 508, 708, 808: presented contour determination unit
109: controller
110: object to be heated
111 to 114: cooking device
201: captured image
202: grayscale image
203a: binary image (threshold a)
203b: binary image (threshold b)
204a: contour image (threshold a)
204b: contour image (threshold b)
301: presented image (first candidate)
302: presented image (second candidate)
303: presented image (third candidate)
601: presented image
602: presented image
603: presented image
701: lighting pattern storage unit
801: cooking menu storage unit

## Claims

1. A cooking device (111 to 114) comprising:
a heating unit (101) that heats an object (110) to be heated;
a heating chamber (102) that houses the object (110) to be heated;
a lighting unit (103a to 103d) that emits light to an inside of the heating chamber (102);
an image capturing unit (104) that captures an image of the inside of the heating chamber (102);
a display (105) that displays a contour of the object (110) to be heated;
an image acquisition unit (106) that acquires an image of the object (110) to be heated from the image capturing unit (104);
a contour candidate generator (107) that generates a plurality of contour candidates of the object (110) to be heated by using the image of the object (110) to be heated acquired by the image acquisition unit (106); and
a presented contour determination unit (108) that determines a contour to be displayed on the display (105) from among the plurality of contour candidates acquired by the contour candidate generator (107);
**characterized in that**:
the cooking device (111 to 114) further comprising:
a controller (109) that causes the display (105) to display the contour determined by the presented contour determination unit (108);
the presented contour determination unit (108) is configured to display, on the display (105), an input screen requesting that an approved portion or a disapproved portion be selected in the contour of the object (110) to be heated that has been displayed on the display (105), when the contour displayed on the display (105) is not approved.

2. The cooking device (111 to 114) according to claim 1 wherein the contour candidate generator (107) is configured to change a parameter of image information about the image of the object (110) to be heated that has been acquired by the image acquisition unit (106), and to generate the plurality of contour candidates of the object (110) to be heated in accordance with the parameter of the image information that has been changed.

3. The cooking device (111 to 114) according to any one of claims 1 or 2, further comprising a lighting pattern storage unit (701) that stores a plurality of lighting patterns that the lighting unit (103a to 103d) uses to emit light to the inside of the heating chamber (102), wherein the presented contour determination unit (108) is configured to determine a presented contour from the plurality of contour candidates that have been generated by the contour candidate generator (107) by using captured images of the object (110) to be heated that have been captured under rays of light emitted in the plurality of lighting patterns.

4. The cooking device (111 to 114) according to any one of claims 1 to 3, further comprising a cooking menu storage unit (801) that stores a plurality of cooking menus and information about the object (110) to be heated that is expected for each of the plurality of cooking menus,
wherein the contour candidate generator (107) is configured to determine each of the plurality of contour candidates to be displayed on the display (105) in accordance with the information about the object (110) to be heated that is expected for each of the plurality of cooking menus.

## Patentansprüche

1. Kochvorrichtung (111 bis 114), umfassend:
eine Heizeinheit (101), die einen zu erhitzenden Gegenstand (110) heizt;
eine Heizkammer (102), die den zu erhitzenden Gegenstand (110) unterbringt;
eine Beleuchtungseinheit (103a bis 103d), die Licht an ein Inneres der Heizkammer (102) abgibt;
eine Bildaufnahmeeinheit (104), die ein Bild des Inneren der Heizkammer (102) aufnimmt;
eine Anzeige (105), die eine Kontur des zu erhitzenden Gegenstands (110) anzeigt;
eine Bilderfassungseinheit (106), die ein Bild des zu erhitzenden Gegenstands (110) von der Bildaufnahmeeinheit (104) erfasst;
einen Konturkandidatengenerator (107), der eine Vielzahl von Konturkandidaten des zu erhitzenden Gegenstands (110) unter Verwendung des zu erhitzenden Gegenstands (110), der von der Bilderfassungseinheit (106) erfasst wird, generiert; und
eine dargestellte Konturbestimmungseinheit (108), die eine auf der Anzeige (105) anzuzeigende Kontur aus der Vielzahl von Konturkandidaten bestimmt, die von dem Konturkandidatengenerator (107) erfasst wurden;
**dadurch gekennzeichnet, dass**:
die Kochvorrichtung (111 bis 114) ferner umfassend:
eine Steuerung (109), die verursacht, dass die Anzeige (105) die durch die dargestellte Konturbestimmungseinheit (108) bestimmte Kontur anzeigt;
die dargestellte Konturbestimmungseinheit (108) konfiguriert ist, um auf der Anzeige (105) einen Eingabebildschirm anzuzeigen, der anfordert, dass ein genehmigter Abschnitt oder ein nicht genehmigter Abschnitt in der Kontur des Gegenstands (110) ausgewählt wird, der erhitzt werden soll, der auf der Anzeige (105) angezeigt wurde, wenn die auf der Anzeige (105) angezeigte Kontur nicht genehmigt wird.

2. Kochvorrichtung (111 bis 114) nach Anspruch 1, wobei
der Konturkandidatengenerator (107) konfiguriert ist, um einen Parameter der Bildinformationen über das Bild des zu erhitzenden Gegenstands (110) zu ändern, der von der Bilderfassungseinheit (106) erfasst wurde, und um die Vielzahl von Konturkandidaten des zu erhitzenden Gegenstands (110) gemäß dem Parameter der Bildinformationen, die geändert wurden, zu generieren.

3. Kochvorrichtung (111 bis 114) nach einem der Ansprüche 1 oder 2, ferner umfassend
eine Beleuchtungsmusterspeichereinheit (701), die eine Vielzahl von Beleuchtungsmustern speichert, die die Beleuchtungseinheit (103a bis 103d) verwendet, um Licht an das Innere der Heizkammer (102) abzugeben, wobei die dargestellte Konturbestimmungseinheit (108) konfiguriert ist, um eine dargestellte Kontur aus der Vielzahl von Konturkandidaten zu bestimmen, die durch den Konturkandidatengenerator (107) generiert wurden, unter Verwendung von aufgenommenen Bildern des zu erhitzenden Gegenstands (110), die unter Lichtstrahlen aufgenommen wurden, die in der Vielzahl von Beleuchtungsmustern abgegeben wurden.

4. Kochvorrichtung (111 bis 114) nach einem der Ansprüche 1 bis 3, ferner umfassend
eine Kochmenü-Speichereinheit (801), die eine Vielzahl von Kochmenüs und Informationen über den zu erhitzenden Gegenstand (110) speichert, die für jedes der Vielzahl von Kochmenüs erwartet werden,
wobei der Konturkandidatengenerator (107) konfiguriert ist, um jeden der Vielzahl von auf der Anzeige (105) anzuzeigenden Konturkandidaten gemäß den Informationen über den zu erhitzenden Gegenstand (110) zu bestimmen, die für jedes der Vielzahl von Kochmenüs erwartet werden.

## Revendications

1. Appareil de cuisson (111 à 114) comprenant :
une unité de chauffage (101) qui chauffe un objet (110) à chauffer ;
une chambre de chauffage (102) qui loge l'objet (110) à chauffer ;
une unité d'éclairage (103a à 103d) qui émet de la lumière à l'intérieur de la chambre de chauffage (102) ;
une unité de capture d'image (104) qui capture une image de l'intérieur de la chambre de chauffage (102) ;
un affichage (105) qui affiche un contour de l'objet (110) à chauffer ;
une unité d'acquisition d'image (106) qui acquiert une image de l'objet (110) à chauffer depuis l'unité de capture d'image (104) ;
un générateur de contour candidat (107) qui génère une pluralité de contours candidats de l'objet (110) à chauffer en utilisant l'image de l'objet (110) à chauffer acquise par l'unité d'acquisition d'image (106) ; et
une unité de détermination de contour présenté (108) qui détermine un contour à afficher sur l'affichage (105) parmi la pluralité de contours candidats acquis par le générateur de contour candidat (107) ;
**caractérisé en ce que** :
l'appareil de cuisson (111 à 114) comprend en outre :
un dispositif de commande (109) qui amène l'affichage (105) à afficher le contour déterminé par l'unité de détermination de contour présenté (108) ;
l'unité de détermination de contour présenté (108) est configurée pour afficher, sur l'affichage (105), un écran d'entrée demandant qu'une partie approuvée ou une partie désapprouvée soit choisie dans le contour de l'objet (110) à chauffer qui a été affiché sur l'affichage (105), lorsque le contour affiché sur l'affichage (105) n'est pas approuvé.

2. Appareil de cuisson (111 à 114) selon la revendication 1, dans lequel
le générateur de contour candidat (107) est configuré pour modifier un paramètre d'informations d'image concernant l'image de l'objet (110) à chauffer qui a été acquise par l'unité d'acquisition d'image (106), et pour générer la pluralité de contours candidats de l'objet (110) à chauffer en conformité avec le paramètre des informations d'image qui a été modifié.

3. Appareil de cuisson (110 à 114) selon l'une quelconque des revendications 1 ou 2, comprenant en outre
une unité de stockage de motif d'éclairage (701) qui stocke une pluralité de motifs d'éclairage que l'unité d'éclairage (103a à 103d) utilise pour émettre de la lumière à l'intérieur de la chambre de chauffage (102), l'unité de détermination de contour présenté (108) étant configurée pour déterminer un contour présenté parmi la pluralité de contours candidats qui ont été générés par le générateur de contour candidat (107) en utilisant des images capturées de l'objet (110) à chauffer qui ont été capturées sous des rayons de lumière émis dans la pluralité de motifs d'éclairage.

4. Appareil de cuisson (110 à 114) selon l'une quelconque des revendications 1 à 3, comprenant en outre
une unité de stockage de menu de cuisson (801) qui stocke une pluralité de menus de cuisson et des informations concernant l'objet (110) à chauffer qui sont prévues pour chacun de la pluralité de menus de cuisson,
le générateur de contour candidat (107) étant configuré pour déterminer chacun de la pluralité de contours candidats à afficher sur l'affichage (105) en conformité avec les informations concernant l'objet (110) à chauffer qui sont prévues pour chacun de la pluralité de menus de cuisson.
